# EUROPÄISCHE PATENTANMELDUNG

(11) **EP 0 926 870 A2**
(43) Veröffentlichungstag der Anmeldung: **30.06.1999**
(21) Anmeldenummer: 98122455.3
(22) Anmeldetag: 26.11.1998
(51) Int. Cl.: H04M 3/50

(54) **Verfahren zur Durchführung eines automatischen Anrufs**

(30) Priorität: 24.12.1997 DE 19757914
(71) Anmelder: Deutsche Telekom AG, 53113 Bonn (DE)
(72) Erfinder: Kühr, Thomas Dr., 53894 Mechernich (DE)

(57) **Zusammenfassung**

Es wird ein Verfahren zum automatischen Durchführen eines Anrufs angegeben, das auch dann eine Nachricht an einen gewünschten Teilnehmer weiterleitet, wenn er sich nicht meldet oder wenn dessen Anschluß besetzt ist und er keinen Anrufbeantworter zum Hinterlassen einer Nachricht besitzt. Der Anrufer kann nach dem vorliegenden Verfahren zum automatischen Anrufen unter den geschilderten Bedingungen durch Drücken einer entsprechenden Funktionstaste an seinem Gerät eine Nachricht für den gewünschten Teilnehmer in seinem eigenen Endgerät oder an einer zentralen Stelle in einem entsprechenden Kommunikationsnetz speichern. In wählbaren Zeitabständen oder automatisch nach Aufhebung des Besetztzustandes wird der Anschluß des gewünschten Teilnehmers angerufen. Sobald eine Verbindung zustande gekommen ist, erfolgt dann die automatische Ansage des aufgesprochenen bzw. eingegebenen Textes. In einer Variante wird dem Angerufenen über ein spezielles Endgerät angezeigt, daß eine Nachricht für ihn vorliegt. Dies kann zum Beispiel mit Hilfe einer Leuchtanzeige erfolgen. Die Nachricht kann er dann sofort oder später durch Knopfdruck abrufen. Die Realisierung erfolgt entweder über ein speziell ausgerüstetes Endgerät oder über ein normales Endgerät mit einem entsprechenden Zusatzgerät.

## Beschreibung

Die Erfindung betrifft ein Verfahren zur Durchführung eines automatischen Anrufs nach dem Oberbegriff des Patentanspruchs 1.

Bei einem nicht zustande gekommenen Telefonat zwischen zwei Teilnehmern, das dadurch hervorgerufen wird, daß entweder das Telefon des Angerufenen sich im Besetztzustand befindet oder daß sich der angerufene Teilnehmer nicht meldet, sind grundsätzlich folgende Abhilfen bekannt: Wenn ein Anrufbeantworter vorhanden ist und der Angerufene sich nicht meldet, kann man eine entsprechende Nachricht auf dem Anrufbeantworter hinterlassen. Eine zweite Möglichkeit besteht in der Anrufweiterschaltung, wenn sich der Angerufene nicht meldet oder der Anschluß besetzt ist. Eine weitere Möglichkeit besteht bei besetztem Anschluß darin, daß ein sogenanntes Anklopfen erfolgt, wodurch der Angerufene weiß, daß ein anderer Teilnehmer mit ihm sprechen möchte. Außerdem sind Kombinationen aus den vorgenannten Lösungen möglich und heutzutage im Einsatz. Außerdem ist von der Deutschen Telekom die sogenannte T-Net-Box bekannt, die in einer Bedienungsanleitung der Deutschen Telekom unter dem Titel "Nichts einfacher als das: So funktioniert die T-Net-Box" beschrieben ist. Diese T-Net-Box hat zwei Betriebsarten, nämlich den Anrufbeantworterbetrieb, wobei die T-Net-Box die Nachrichten von einem Anrufer aufzeichnet und den Ansagebetrieb, wobei die T-Net-Box keine Nachrichten speichert, sondern den Anrufern lediglich einen aufgesprochenen Ansagetext mitteilt. Die bekannten, oben beschriebenen verschiedenen Lösungen sind jedoch nicht in der Lage, einen angerufenen Teilnehmer zu erreichen wenn dieser sich nicht meldet und keinen Anrufbeantworter besitzt oder wenn der Anschluß besetzt ist.

Der Erfindung liegt deshalb die Aufgabe zugrunde, ein Verfahren zum automatischen Durchführen eines Anrufs mittels Telefon zu schaffen, das sicherstellt, daß ein besetzter oder angerufener, nicht erreichbarer Teilnehmer automatisch von einem Anruf informiert wird und anhören kann oder daraufhin diesen Anruf sofort abrufen kann.

Die erfindungsgemäße Lösung ist im Kennzeichen des Patentanspruchs 1 charakterisiert.

Weitere Lösungen bzw. Ausgestaltungen der Erfindung sind in den Kennzeichen der Patentansprüche 2 bis 7 charakterisiert.

Wenn bei Anwendung des Verfahrens bei einem initiierten Anruf festgestellt wird, daß der Angerufene nicht erreichbar ist, erreicht der Anrufer lediglich durch Drücken einer entsprechenden Funktionstaste am Telefon und Aufsprechen bzw. speichern seiner Nachricht in seinem Endgerät oder an einer zentralen stelle im jeweiligen Kommunikationsnetz, daß in wählbaren Zeitabständen oder automatisch nach Aufhebung des Besetztzustandes der Anschluß des Angerufenen angerufen wird. Der Angerufene wird dadurch in die Lage versetzt, zu jeder Zeit diesen Anruf in Empfang zu nehmen und die für ihn bestimmte aufgesprochene Nachricht zu hören. Der Anrufer ist somit sicher, daß seine Nachricht beim Angerufenen ohne sein weiteres Zutun zum nächsten Zeitpunkt tatsächlich ankommt und zwar ohne daß der Angerufene einen automatischen Anrufbeantworter hat.

Die Erfindung wird nun anhand von Ausführungsbeispielen näher erklärt.

Voraussetzung für das Verfahren ist, daß der Anrufer einen erfindungsgemäßen automatischen Anrufdurchführer besitzt. Stellt nun der Anrufer fest, daß der von ihm gewünschte Teilnehmer aus den oben genannten Gründen nicht erreicht werden kann, drückt er nur eine entsprechende Funktionstaste seines Telefons und spricht eine Nachricht auf, die in seinem Endgerät oder an einer zentralen Stelle im Kommunikationsnetz abgespeichert wird.

Dabei sind folgende Varianten möglich:
- Realisierung des Verfahrens des automatischen Anrufdurchführens im Endgerät oder im Kommunikationsnetz (zum Beispiel Anrufbeantworter im Netz, T-Net-Box).
- Im Besetztfall wird der Anrufer sofort gefragt, ob er den automatischen Dienst bzw. Anrufdurchführer nutzen möchte.
- Wenn der Angerufene sich nicht meldet, wird der Anrufer nach n-maligem Anläuten aufgefordert, einen Text bzw. seine Nachricht aufzusprechen.

In wählbaren Zeitabständen oder automatisch nach Aufhebung des Besetztzustandes ruft durch Implementierung des beschriebenen Verfahrens der automatische Anrufdurchführer den Anschluß des gewünschten angerufenen Teilnehmers an. Sobald eine Verbindung zustande gekommen ist, erfolgt beispielsweise folgende Ansage: "Hier meldet sich der automatische Anrufdurchführer" oder auch "Phone-Butler" "des Anschlusses ... (dieser Text wird im System fest einprogrammiert) plus xxx" (freiwählbarer Text).

Bei einer weiteren Variante der Realisierung des Verfahrens des automatischen Anrufens in einem Kommunikationsnetz kann dem gewünschten Teilnehmer über ein spezielles Endgerät angezeigt werden, daß eine Nachricht für ihn vorliegt. Dies kann zum Beispiel mit Hilfe einer roten Leuchtanzeige am Endgerät selbst erfolgen. Den Anruf als gesprochenen Text kann der Teilnehmer sofort oder später per Knopfdruck an seinem Telefon oder Handy abrufen. Eine Realisierung erfolgt entweder über ein speziell ausgerüstetes Endgerät für den automatischen Anrufdurchführer oder durch ein normales Telefon bzw. Endgerät mit einem Zusatzgerät, in dem das Verfahren zum Durchführen eines automatischen Anrufs implementiert ist. Wichtig ist bei der Implementierung nur, daß ein entsprechend steuerbares Speichermedium für den aufgesprochenen Text vorhanden ist und zwar entweder im Endgerät des Anrufers oder zentral im Telekommunikationsnetz und daß in wählbaren Zeitabständen oder automatisch durch ein Programm oder eine Steuerschaltung nach Aufhebung des Besetztzustands der Anschluß des gewünschten Teilnehmers angerufen wird. Die Abfrage des aufgesprochenen Textes kann dann vom angerufenen Teilnehmer zu jeder Zeit erfolgen, ohne daß der Anrufer zum Beispiel durch Wahlwiederholung abgelenkt wird. Außerdem wird sichergestellt, daß ein gewünschter Anruf nicht in Vergessenheit gerät und schnellstmöglich übermittelt wird.

## Patentansprüche

1. Verfahren zur Durchführung eines automatischen Anrufs mit einem Endgerät als Telefonapparat oder Mobiltelefon über ein entsprechendes Telekommuniktionsnetz bei besetztem Anschluß oder Nichtmelden des gewünschten Teilnehmers, dadurch gekennzeichnet,
daß der Anrufer eine entsprechende Funktionstaste drückt, daß darauf seine Nachricht für den gewünschten Teilnehmer über ein Mikrofon des Endgerätes in seinem Endgerät oder in einem zentralen Speicher des Telekommunikationsnetzes abgespeichert wird, daß danach in wählbaren Zeitabständen oder automatisch nach Aufhebung des Besetztzustandes der Anschluß des gewünschten Teilnehmers angerufen wird und sobald eine Verbindung zustande gekommen ist, die im Endgerät des Anrufers oder in dem zentralen Speicher des Kommunikationsnetzes gespeicherte Nachricht über das Endgerät des angerufenen Teilnehmers ausgegeben wird.

2. Verfahren nach Patentanspruch 1, dadurch gekennzeichnet,
daß im Besetztfall der Anrufer vom automatischen Anrufdurchführer sofort gefragt wird, ob er die automatische Anruffunktion nutzen möchte.

3. Verfahren nach Patentanspruch 1, dadurch gekennzeichnet,
daß bei Nichtmelden des gewünschten Teilnehmers der Anrufer nach n-maligem Anläuten automatisch aufgefordert wird, einen Text für den automatischen Anrufdurchführer aufzusprechen.

4. Verfahren nach einem der Patentansprüche 1 bis 3, dadurch gekennzeichnet,
daß das automatische Durchführen von Anrufen mittels eines im Netz integrierten Systems realisiert ist,
daß dem angerufenen Teilnehmer über ein entsprechend ausgerüstetes Endgerät angezeigt wird, daß eine Nachricht für ihn vorliegt, die er dann sofort oder später durch Knopfdruck abrufen kann.

5. Verfahren nach Patentanspruch 4, dadurch gekennzeichnet,
daß die Nachrichtenanzeige durch eine Leuchtanzeige realisiert ist.

6. Verfahren nach Patentanspruch 1, dadurch gekennzeichnet,
daß zur Implementierung ein speziell ausgerüstetes Endgerät oder ein normales Endgerät als Telefon oder Mobiltelefon mit einem Zusatzgerät für den automatischen Anruf programmiert wird.

7. Verfahren nach Patentanspruch 6, dadurch gekennzeichnet,
daß die Implementierung im Endgerät und/oder im Zusatzgerät für den automatischen Anrufdurchführer mittels mikroprozessorgesteuerter Speicher erfolgt.
